Europäisches Patentamt

European Patent Office

Office européen des brevets

(19)

(11) Numéro de publication: **0 100 514**
**B1**

(12) **FASCICULE DE BREVET EUROPEEN**

(45) Date de publication du fascicule du brevet: **19.11.87**

(51) Int. Cl.⁴: **H 04 Q 3/00, H 04 M 19/02**

(21) Numéro de dépôt: **83107328.3**

(22) Date de dépôt: **26.07.83**

(54) **Dispositif de détection de boucle en phase sonnerie.**

(30) Priorité: **30.07.82 FR 8213321**

(43) Date de publication de la demande:
**15.02.84 Bulletin 84/07**

(45) Mention de la délivrance du brevet:
**19.11.87 Bulletin 87/47**

(84) Etats contractants désignés:
**BE CH DE FR GB IT LI NL SE**

(56) Documents cités:
**EP-A-0 018 859**
**DE-B-2 359 867**
**US-A-3 746 798**
**US-A-3 829 619**

(73) Titulaire: **ALCATEL CIT**
**33, rue Emeriau**
**F-75015 Paris (FR)**

(72) Inventeur: **Albouy, Pierre**
**11 Cottages de Kertalou route de Morlaix**
**F-22300 Lannion (FR)**

(74) Mandataire: **Weinmiller, Jürgen et al**
**Lennéstrasse 9 Postfach 24**
**D-8133 Feldafing (DE)**

Courier Press, Leamington Spa, England.

## 0 100 514

**Description**

L'invention concerne la détection de boucle d'abonné de phase sonnerie. Un dispositif selon le préambule de la revendication 1 est connu, par exemple à partir du document EP—A—0018 859.

On sait qu'en phase sonnerie les systèmes téléphoniques doivent être capables de détecter un décrochage du combiné, et ce aussi rapidement que possible et avec le maximum de fiabilité.

D'une manière générale la détection de boucle doit être assurée quelle que soit la phase dans laquelle se trouve un équipement d'abonné. En phase demandeur, cette détection ne pose pas trop de problème, il n'en est pas de même en phase demandé, c'est-à-dire lorsque l'abonné est demandé et décroche son combiné. En effet, dans les systèmes téléphoniques actuels, une tension continue est superposée à l'onde de sonnerie et c'est le passage du courant continu provoqué par le décrochage qui permet la détection de boucle. Une telle détection devient très difficile lorsque les courants alternatifs dans la ligne, courants dus à la composante alternative du signal de sonnerie, sont nettement supérieurs à la composante du courant continu à détecter. En outre, la grande diversité des impédances de ligne et de sonneries oblige à concevoir des systèmes téléphoniques tenant compte des pires cas, et vient donc grever les performances de la majorité des systèmes.

Un abonné est relié au central téléphonique par une ligne de résistance RL et la sonnerie est connectée aux bornes de la ligne; du point de vue électrique la sonnerie est assimilable à une résistance Rs en série avec un condensateur Cs. Egalement aux bornes de la ligne, donc en parallèle sur la sonnerie, on trouve le poste de l'abonné qui du point de vue électrique est équivalent à une résistance Rt en série avec un commutateur K, ce commutateur représentant le crochet du poste. La ligne est alimentée par un générateur continu, délivrant une tension continue de 48 volts par exemple, dans la majorité des cas; une source de sonnerie, constituée par un générateur alternatif délivrant par exemple une tension efficace de 80 volts, est connectée en série avec le générateur continu. En mode raccroché, donc pour un abonné demandé, seul le générateur alternatif provoque un courant dont la valeur est déterminée par la résistance de ligne RL et par l'impédance de la sonnerie, c'est-à-dire la résistance Rs et le condensatuer Cs en série. En mode décroché, donc lorsque l'abonné demandé décroche son combiné, le générateur continu délivre un courant continu déterminé par les résistances RL et Rt, et le générateur alternatif délivre un courant déterminé par la résistance de ligne RL en série avec une impédance constituée par la résistance Rt en parallèle sur l'impédance de la sonnerie, donc en parallèle sur l'ensemble série résistance Rs, condensateur Cs. Le courant dans la ligne, en mode décroché comporte donc une composante continue et une composante alternative. Le rapport de ces composantes est généralement, et sauf cas particulier, différent du rapport des tensions continue et alternative des générateurs.

Dans les systèmes classiques la détection de boucle en phase sonnerie consiste à détecter la composante continue du courant de ligne.

Un dispositif de ce type comporte un pont résistance, dont deux résistances en série avec chaque fil de ligne constituent chacun un bras du pont; les deux autres bras du pont sont constitués chacun de deux résistance en série et le point milieu de chacun de ces deux bras est relié à un amplificateur différentiel qui délivre en sortie une tension proportionnelle au courant transversal instanté dans la ligne. Il n'est pas aisé d'obtenir la détection de boucle directement à partir de ce signal par comparison avec un seuil de détection, car l'amplitude de la composante alternative de ce signal est bien plus grande que le seuil. En effet, avant le décrochage le courant de ligne ne comporte pas de composante continue mais seulement une composante alternative engendrée par le générateur altérnatif, de sorte que le signal délivré par l'amplifacteur différentiel ne comporte qu'une composante alternative et qu'il devient supérieur au seuil au cours des alternances positives de cette composante alternative. Après le décrochage le courant de ligne comporte une composante continue et une composante alternative lors des phases de sonnerie, c'est-à-dire lorsque le générateur alternatif envoie un signal de sonnerie sur la ligne; le signal délivré par l'amplificateur différentiel comporte donc une composante continue et une composante alternative dont l'amplitude est telle qu'il devient inférieur au seuil au cours des alternances négatives. Ceci oblige à filtrer le signal de manière à atténuer la composante alternative, et ce de façon suffisante pour que son amplitude soit toujours inférieure au seuil de détection avant le décrochage, et pour que son amplitude après le décrochage ne soit pas suffisante pour que le signal devienne inférieur au seuil au cours des alternances négatives.

Le signal délivré par l'amplificateur est donc filtré, par un filtre constitué d'une résistance R et d'un condensateur C, avant d'être appliqué à l'entrée d'un comparateur dont une autre entrée reçoit le seuil de détection. La constante de temps RC de ce filtre est déterminée pour le cas le plus défavorable, c'est-à-dire celui d'une ligne courte pour laquelle le courant alternatif de sonnerie est le plus élevé, puisque la résistance de ligne est faible; dans ce cas la constante de temps est de l'ordre de 80 millisecondes et pratiquement, afin de garder une certaine marge de sécurité, on adopte une valeur de 100 millisecondes. Dans ces conditions, le cas d'une ligne longue pour laquelle la résistance de la ligne est élevée, constitue le cas le plus défavorable pour la détection de boucle en phase de sonnerie puisque le courant continu dans la ligne a une valeur faible de l'ordre de 20 milliampères; le courant alternatif de sonnerie dans la ligne est plus faible que dans le cas d'une ligne courte et en sortie de l'amplificateur le signal appliqué au filtre comporte une composante alternative plus faible que dans le cas d'une ligne courte. En sortie du filtre la composante alternative du signal appliquée au comparateur est faible par rapport à la composante

2

**0 100 514**

continue et on peut la négliger; dans ces conditions, avec un seuil de détection correspondant à une courant de ligne de 10 milliampères, le temps de détection de boucle Td est de l'ordre de 70 millisecondes.

Dans les joncteurs électroniques, il est avantageux, pour des raisons de dissipation et de technologie, de réduire autant que possible les tensions d'alimentation. Dans le cas où c'est le joncteur électronique qui génère la sonnerie, comme on ne peut pas trop réduire la tension alternative de sonnerie, on diminue la valeur de la tension continue, et certains types de joncteurs électroniques fonctionnent avec un générateur alternatif de 60 volts efficaces pour l'onde de sonnerie, et un générateur continu de 12 volts pour l'alimentation du poste d'abonné. Dans de telles conditions, la détection de boucle en phase sonnerie devient encore plus difficile. La constante de temps du filtre passe alors de 80 à 250 millisecondes, et la rapidité de détection augmente notablement pour devenir proche des normes imposées par les Administrations des Postes, soit 250 millisecondes.

D'une manière générale le système de détection doit être calculé pour le cas le plus défavorable qui est celui pour lequel l'amplitude de la composante alternative du courant de ligne est la plus grande; dans le cas d'un joncteur électronique fonctionnant avec un générateur continu de 12 volts, la difficulté est accrue par le fait le rapport entre les composantes continue et alternative diminue.

Il faut également tenir compte du fait qu'une ligne d'abonné est soumise à des perturbations extérieures de toute nature, et la seule parade à ces signaux perturbateurs consiste à prévoir, dans le dispositif de détection de boucle, une marge de sécurité entre l'amplitude de la composante alternative après filtrage et le seuil de détection. Ceci conduit inévitablement à augmenter le temps de détection, et cela d'autant plus que l'on désire une meilleure immunité aux perturbations extérieures.

Dans le cas d'un joncteur électronique, et principalement dans le cas d'un joncteur fonctionnant avec un générateur continu de 12 volts, la marge de sécurité doit être réduite au minimum si l'on veut pas grever les performances.

L'invention a pour but de pallier les difficultés de la détection de boucle en phase sonnerie, notamment dans le cas des joncteurs électroniques, et de permettre d'effectuer cette détection avec une marge de sécurité suffisante en présence de perturbations extérieures sur la ligne.

On connaît également, par le document EP—A—18859, un dispositif de commande de sonnerie qui détecte les passages par zéro du courant de ligne et détermine le rapport cyclique dudit courant. Deux photodétecteurs, montés en parallèle et en inverse, permettent d'obtenir les durées d1 et d2 des alternances du courant de ligne lors du décrochage; un troisième photodétecteur permet d'obtenir la durée do d'une alternance du courant alternatif de sonnerie. Le rapport cyclique (d2−d1)/do est calculé et comparé à une valeur déterminée; un signal de sortie est émis lorsque le rapport cyclique dépasse la valeur déterminée. La mesure du rapport cyclique et la comparaison sont effectuées sur plusieurs périodes du signal de sonnerie, et le signal de sortie n'est émis qu'au bout d'un nombre p convenablement choisi de mesures. Le dispositif de mesure est numérique et son immunité aux bruits est d'autant plus faible que le nombre de passages à zéro provoqués par le bruit est plus élevé.

L'invention a pour objet un dispositif de détection de boucle en phase sonnerie, comportant des moyens de détection des passages à zéro d'un signal de tension proportionnel au courant de ligne pour élaborer un signal impulsionnel constitué par des impulsions rectangulaires positives et négatives de même amplitude et dont la largeur dépend du rapport cyclique du signal de ligne, des moyens de traitement du signal impulsionnel et des moyens de mémorisation pour mémoriser un signal délivré par les moyens de traitement, caractérisé par le fait que les moyens de traitement sont constitués par un circuit intégrateur saturable délivrant un signal triangulaire ayant une valeur crête positive croissante après décrochage et par un comparateur pour comparer le signal triangulaire avec une tension de référence et délivrer un signal aux moyens de mémorisation lorsqu'un abonné appelé a décroché.

L'invention sera décrite ci-après à l'aide d'exemples de réalisation illustrés par les figures annexées dans lesquelles:

la figure 1 est un schéma électrique d'un exemple de réalisation de l'invention,

la figure 2 représente un circuit de mesure du courant de ligne utilisé dans l'exemple de réalisation de la figure 1,

la figure 3 est un schéma électrique d'une variante de réalisation de l'invention,

la figure 4 représente un signal triangulaire délivré par un circuit intégrateur des figures 1 et 3

les figures 5a et 5b représentent respectivement la tension et un signal rectangulaire à l'entrée et à la sortie d'un détecteur de passages à zéro de la figure 3 dans le cas d'un courant de ligne non rigoureusement sinusoïdal

les figures 6a et 6b représentent respectivement la tension et un signal rectangulaire à l'entrée et à la sortie d'un détecteur de passages à zéro de la figure 3 dans le cas d'un courant de ligne sinusoïdal.

Le dispositif de détection de boucle en phase sonnerie, objet de l'invention, est basé sur le fait que le rapport cyclique du courant de ligne varie lorsque l'abonné demandé décroche son combiné, alors que jusqu'à présent les dispositifs connus de détection de boucle en phase sonnerie sont basés sur le niveau de la composante continue du courant de ligne au décrochage.

On va donc calculer le rapport cyclique du courant de ligne avant et après décrochage et considérer le cas le plus défavorable afin de déterminer les conditions dans lesquelles la détection de boucle doit être faite pour offrir une bonne sécurité, notamment dans le cas des joncteurs électroniques.

Avant décrochage, et en présence d'un signal alternatif de sonnerie sur la ligne, le courant dans celle-ci

3

est pratiquement sinusoïdal et ne comporte pas de composante continue. En appelant T la durée de la période du signal de sonnerie dont les alternances positives et négatives ont une durée T/2, le rapport cyclique est égal au rapport de la durée T/2 d'une alternance positive sur la durée T de la période du signal; ce rapport cyclique est donc égal à 1/2. Avant décrochage, la résistance de ligne RL est en série avec la sonnerie, c'est-à-dire avec la résistance Rs de sonnerie en série avec le condensateur Cs de sonnerie.

Au décrochage, lorsque l'abonné demandé décroche son combiné, la résistance de ligne RL est en série avec un circuit constitué d'une part par la résistance Rs de la sonnerie en série avec le condensateur Cs de sonnerie, et d'autre part, en parallèle sur la sonnerie, par la résistance Rt du poste. Les impédances résultantes sont donc: pour la composante continue du courant, Zc=RL+Rt et pour la composante alternative du courant,

$$|Za| = \sqrt{\frac{[2\pi\, F.Cs.RL\,(Rt+Rs)+Rt.Rs]^2+(RL+Rt)^2}{[2\pi\, F.Cs\,(Rt+Rs)]^2+1}} \qquad (1)$$

F étant la fréquence du signal de sonnerie.

Le meilleur cas, pour la détection de boucle, est celui pour lequel le rapport de l'impédance |Zc| en continu sur l'impédance |Za| en alternatif est égal à 1, le cas le plus défavorable étant celui pour lequel ce rapport est le plus grand, cas qui est obtenu lorsque Rt tend vers zéro ce qui est souvent le cas en pratique. Le cas le plus défavorable est obtenu pour une forte valeur de l'impédance |Zc| en continu avec la plus faible valeur possible pour l'impédance |Za| en alternatif.

Si l'on fait tendre la résistance de ligne RL vers zéro, et que l'on prenne Rt=2000 ohms, la résistance Rs de sonnerie étant égale à 1000 ohms et le condensateur Cs de sonnerie étant égal à 2 microfarads, on trouve que la résistance équivalente |Za| pour la source alternative est de 1107 ohms à une fréquence de 50 Hz.

En désignant par Vc la tension continue d'alimentation de la ligne et par Va la tension efficace de la source de sonnerie, le courant I dans la ligne, après décrochage est donné par l'équation:

$$I = \frac{Vc}{Zc} + \frac{Va}{|Za|}\sin wt \qquad (2)$$

avec w=2πF

Avec les valeurs indiquées ci-dessus on a:

$$I = \frac{12}{2.10^3} + \frac{60\sqrt{2}}{1107}\sin wt \qquad (3)$$

Les valeurs de t qui annulent le courant I sont:

$$t1 = \frac{Arc\ sin\ (-12.1107/2.10^3.60.\sqrt{2})}{w} = -2{,}5.10^{-4}\ seconde$$

et

$$t2 = \frac{\pi - Arc\ sin\ (-12.1107/2.10^3.60\sqrt{2})}{w} = 10{,}25.10^{-3}\ seconde$$

L'intervalle de temps t2−t1 a pour valeur $10{,}5.10^{-3}$ seconde

Le rapport cyclique, dans ce cas le plus défavorable pour un signal de fréquence 50 Hz est donc

d=10,5/20 soit 52,5%

On va calculer à présent le rapport cyclique dans le cas le plus favorable, c'est-à-dire lorsque les impédances en continu Zc et en alternatif |Za| sont égales, cas qui correspond à Rt=0. Dans ce cas les composantes continue et alternative du courant sont proportionnelles aux sources de tension, soit dans l'exemple chiffré ci-dessus, proportionnelles à 12 volts et 60 volts. Dans ces conditions, et toujours avec une fréquence de 50 Hz, le rapport cyclique est de 54,5%.

Les dispositifs de détection de boucle connus, utilisent un signal de tension proportionnel au courant I de ligne, U=KI. Ce signal de tension ne comporte qu'une composante alternative avant décrochage puisqu'il n'y a pas de courant continu, donc pas de composante continue, tant que l'abonné demandé n'a pas décroché sont combiné. Après décrochage le signal de tension comporte une composante continue et une composante alternative.

**0 100 514**

Le dispositif de détection de boucle en phase sonnerie de l'invention détecte les passages par zéro du signal de tension U=KI proportionnel au courant de ligne pour obtenir un signal impulsionnel constitué par des impulsions rectangulaires positives et négatives de même amplitude et dont la largeur dépend du rapport cyclique du signal de tension, intègre le signal impulsionnel pour obtenir un signal triangulaire ayant une valeur crête positive croissant après décrochage, compare le signal triangulaire à une tension de référence positive pour obtenir un signal de comparaison lorsque le signal triangulaire est égal à ladite tension de référence positive, mémorise le signal de comparison et délivre un signal de détection de boucle à partir du signal de comparaison mémorisé.

Avant décrochage le rapport cyclique du courant de ligne est de 50% et les impulsions rectangulaires positives et négatives ont même largeur, égale à T/2, T étant la période du signal de sonnerie. Après décrochage un courant continu circule dans la ligne et le rapport cyclique est supérieur à 50%. Il en résulte que les impulsions rectangulaires positive sont plus larges que les impulsions négatives. Après intégration le signal triangulaire comporte des rampes croissantes de durée plus grande que les rampes décroissantes, et le valer crêtre positive atteinte par chaque rampe croissante augmente d'une rampe croissante à l'autre. Lorsque lors d'une rampe croissante le signal triangulaire atteint la tension de référence cela indique que la boucle d'abonné est fermée.

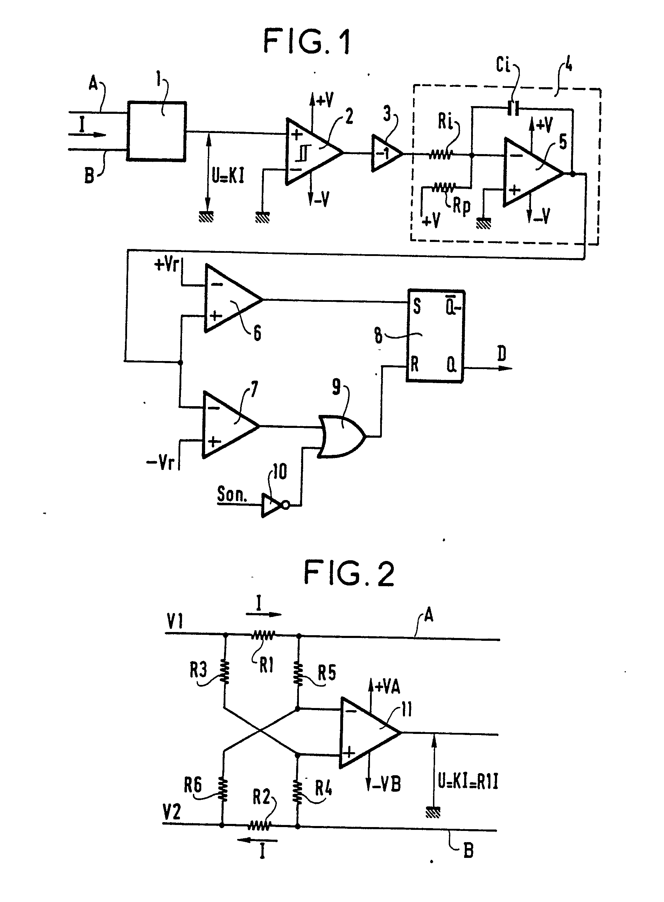

La figure 1 représente un dispositif de détection de boucle en phase sonnerie de l'invention. Dans cette figure, deux fils A et B d'une ligne d'abonné sont reliés à un circuit de mesure 1 du courant de ligne. Le circuit de mesure a sa sortie reliée à une entrée positive d'un détecteur de passages à zéro 2, tel par exemple qu'une bascule de SCHMITT, dont une entrée négative est à la masse. Le détecteur de passage à zéro est alimenté par une source continue de tensions +V et −V, et sa sortie est reliée à travers un inverseur analogique 3 à un circuit intégrateur 4, saturable. Le circuit intégrateur est constitué d'un amplificateur 5 alimenté par la source continue de tensions +V et −V et ayant des tensions de saturation +Vsat et −Vsat, d'un condensateur Ci connecté entre une entrée négative de l'amplificateur et sa sortie, d'une résistance Ri reliant l'inverseur analogique à l'entrée négative de l'amplificateur, et d'une résistance de polarisation Rp reliant l'entrée négative de l'amplificateur à une tension positive +V. La sortie de l'amplificateur 5 est reliée à une entrée positive d'un premier comparateur 6 et à une entrée négative d'un deuxième comparateur 7. Le premier comparateur 6 a une entrée négative reliée à une tension de référence +Vr de valeur égale ou inférieure à la tension de saturation +Vsat, et sa sortie reliée à une entrée signal S d'une bascule 8 de type RS. Le deuxième comparateur 7 a une entrée positive reliée à une tension de référence négative −Vr; les tensions +V et −V ainsi que les tensions +Vr et −Vr sont symétriques par rapport à la masse. La sortie du deuxième comparateur 7 est reliée à une entrée d'une porte OU, 9, dont la sortie est reliée à l'entrée remise à zéro R de la bascule 8. Un signal logique Son, est appliqué à une autre entrée de la porte OU à travers un inverseur logique 10. La bascule 8 délivre, sur sa sortie Q par exemple, un signal D de détection de boucle.

Le circuit de mesure 1 de la figure 1, qui délivre une tension U=KI proportionnelle au courant dans la ligne d'abonné, est de tout type connu; il est constitué de deux résistances R1 et R2, de même valeur, en série avec les fils A et B respectivement; les potentiels $V_1$ et $V_2$ auxquels sont reliés les résistances R1 et R2, respectivement, sont ceux d'une source d'alimentation continue servant à alimenter la ligne d'abonné. Le fil A est relié au potentiel V2 par deux résistances R5 et R6 en série; le fil B est relié au potentiel V1 par deux résistances R3 et R4 en série; les résistances R3, R4, R5 et R6 ont même valeur. Un point commun aux résistances R5 et R6 est relié à une entrée négative d'un amplificateur 11, et un point commun aux résistances R3 et R4 est relié à une entrée positive de l'amplificateur 11 alimenté par une source continu de potentiels +VA et −VB. Les résistances R1 et R22 étant parcourues par le courant de ligne I, l'amplificateur 11 délivre en sortie une tension U=R1.I puisque R1 et R2 ont même valeur. Dans le cas d'un joncteur électronique la ligne d'abonné est alimentée à partir d'une source continue de tension 12 volts; les potentiels V1, +VA sont égaux à +6 volts et les potentiels V2 et −VB sont égaux à−6 volts.

On va examiner à présent le fonctionnement du dispositif de détection de boucle représenté figure 1, et préciser tout d'abord le rôle de la résistance de polarisation Rp, reliée à l'entrée négative de l'amplificateur 5.

Etant donné qu'il peut y avoir un courant de fuite if dans la ligne en phase sonnerie, le rapport cyclique peut être légèrement différent de 50% avant décrochage. En déisgnant par Z1 le module de l'impédance de la ligne en alternatif avant sonnerie, le courant I dans la ligne est donnée par l'équation:

$$I = if + \frac{Va}{|Z1|} \sin \, wt \tag{4}$$

avec

$$|Z1| = \sqrt{(RL+Rs)^2 + \frac{1}{C^2 \, w^2}}$$

En reprenant les valeurs adoptés précédemment, RL=0, Rs=1000 ohms et Cs=2 microfarads, il vient $|Z1|$=1880 ohms.

Lorsque la ligne est alimentée sous 48 volts le courant de fuite if peut attendre 2,5 mA; dans le cas d'un

5

# 0 100 514

joncteur électronique alimentant la ligne sous 12 volts, le courant de fuite peut atteindre 0,625 mA. En reportant ces valeurs dans l'équation (4) on a:

$$I=0,625.10^{63}+\frac{60\ \sqrt{2}}{1880}\ \sin\ wt$$

Les valeurs de t qui annulent le courant I sont:

$$t'1=\frac{-\text{Arc sin}\ (-0,625.10^{-3}.1880/60\ \sqrt{2})}{w}$$

et

$$t'2=\frac{\pi-\text{Arc sin}\ (-0,625.10^{63}.1880/60\ \sqrt{2})}{w}$$

ce qui donne pour une frequence de 50 Hz, un rapport cyclique d1=50,45%.

Le détecteur de passages à zéro 2, délivre un signal impulsionnel constitué par des impulsions rectangulaires positives et négatives d'amplitude +V et −V, de même largeur T/2 avant décrochage et ce en l'absence de courant de fuite, c'est'à-dire lorsque le rapport cyclique du courant de ligne est de 50%. En présence d'un courant de fuite le rapport cyclique d1 est supérieur à 50%, et il en résulte que le signal impulsionnel présente, dans ce cas, un biais, c'est-à-dire une dissymétrie temporelle moyenne, qui va donner un courant moyen i.e. dans la résistance Ri:

$$ie=\frac{V.T1}{T.Ri}-\frac{V.T2}{T.Ri} \tag{5}$$

équation dans laquelle T1 et T2 sont les durées des impulsions rectangulaires positives et négatives. Le rapport cyclique d1 est défini par

$$\frac{T1}{T}$$

et comme T1+T2=T on a: T2=T−T1=T (1-d1)

L'équation (5) devient:

$$ie=\frac{V.(d1-1+d1)}{Ri}=\frac{V.(2\ d1-1)}{Ri} \tag{6}$$

Avec le rapport cyclique d1 calculé précédemment, d1=50,45%, le courant moyen ie est égal à:

$$\frac{V.9.10^{-3}}{Ri}$$

C'est le rôle de la résistance de polarisation Rp de compenser le courant moyen ie. Dans l'exemple illustré figure 1, la résistance de polarisation Rp est reliée au potentiel+V, ce qui donne

$$Rp=\frac{V}{ie}=\frac{Ri}{9.10^{-3}} \tag{7}$$

Le rôle de la résistance de polarisation Rp ayant été précisé, le fonctionnement du dispositif de la figure 1 est le suivant.

Avant décrochage, le signal de tension U=KI délivré par le circuit de mesure 1 est appliqué au détecteur de passages par zéro 2, qui délivre des impulsions rectangulaires d'amplitude +V et −V et de durée T/2, en l'absence de courant de fuite, ou de durée T1 et T2, s'il y a un courant de fuite sur la ligne. Après inversion par l'inverseur analogique 3, ces impulsions sont appliquées au circuit intégrateur 4 qui délivre un signal triangulaire. Le présence de l'inverseur analogique est justifiée par le fait que le circuit intégrateur inverse les signaux qui lui sont appliqués; grâce à l'inverseur analogique 3 les rampes croissantes du signal triangulaire correspondent aux impulsions positives délivrées par le détecteur de passages à zéro, et les rampes décroissantes correspondent aux impulsions négatives. Ces impulsions

6

positives et négatives correspondant elles mêmes, respectivement, aux alternances positives et négatives du signal de sonnerie, donc du courant dans la ligne.

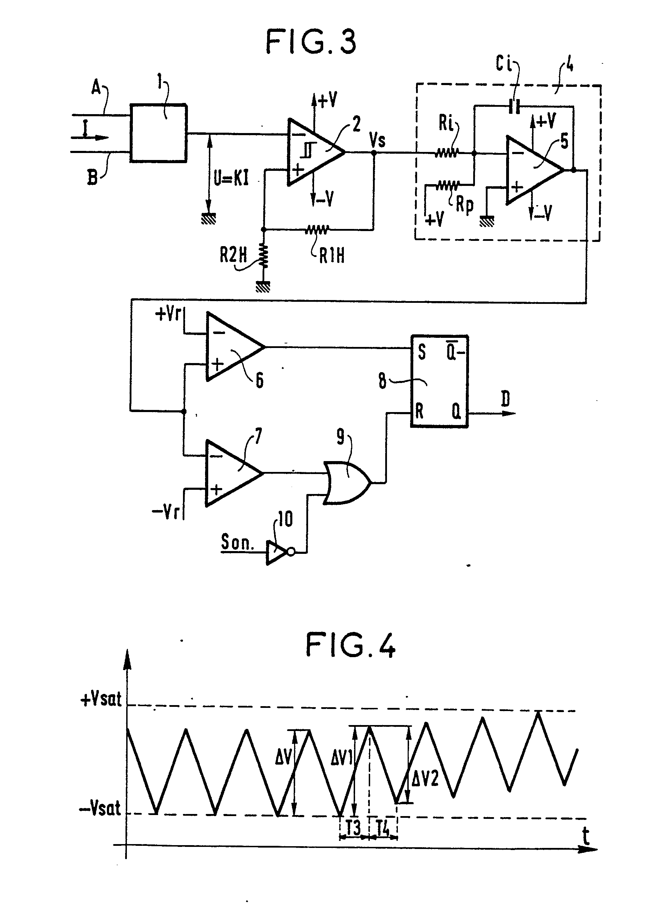

L'amplificateur 5 du circuit intégrateur 4 fonctionne pratiquement entre deux tensions limites, +Vsat et −Vsat puisque pour un signal constant appliqué à l'entrée le signal de sortie ne peut croître indéfiniment. Ces deux tensions limites sont des tensions de saturation de l'amplificateur qui sont égales ou inférieures aux tensions +V et −V. Le courant continu circulant dans la résistance de polarisation Rp amène l'amplificateur à la tension négative −Vsat, en l'absence de tout autre signal. Lorsque le détecteur de passages à zéro délivre un signal rectangulaire, le circuit intégrateur 4 délivre un signal triangulaire tel que représenté figure 4. Sur la partie gauche de la figure le signal triangulaire correspond au signal de sonnerie sur la ligne avant décrochage. On observe également, sur cette figure que l'amplitude des rampes croissantes sont inférieures à la tension +Vsat de saturation de l'amplificateur 5.

Dans cette figure 4 on a supposé que les tensions de saturation +Vsat et −Vsat de l'amplificateur 5 étaient différentes des tensions d'alimentation +V et −V.

Le signal triangulaire délivré par le circuit intégrateur 4 est appliqué à l'entrée positive du premier comparateur 6, lequel, aussi longtemps que le signal triangulaire a une valeur inférieure à la tension de référence positive +Vr, ne délivre pas de signal à l'entrée S de la bascule 8. La bascule 8, constituée par exemple par deux portes OU-NON (NOR) a pour table de vérité:

Pour S=1, R=0 on a Q=1, Q correspondant à la sortie de la porte OU-NON ayant R pour entrée.
Pour S=0, R=1 on a Q=0.
Pour R=S=0, Q ne change pas.
Pour R=S=1, Q est indéterminé.

Part conséquent, avant décrochage, le signal de détection D, sur la sortie Q de la bascule 8, a une valeur nulle lorsque S=0 et R=0.

La condition R=0 est obtenue grâce à un signal Son, de valeur 1 lorsqu'un signal de sonnerie est envoyé sur la ligne, et de valeur 0 en l'absence de signal de sonnerie. Le signal Son étant inversé par l'inverseur 10 avant d'être appliqué à la porte OU 9, il en résulte que la porte OU délivre un signal de valeur 0 à l'entrée R de la bascule lorsqu'il a la valeur 1.

Après décrochage, le courant I dans la ligne comporte une composante continue et une composante alternative et le rapport cyclique de la composante alternative est différent de 50%. On a vu que ce rapport était de 52,5% dans le cas le plus défavorable. Le signal de tension U=KI délivré par le circuit de mesure 1 comporte donc une composante continue et une composante alternative, de sorte que la durée des impulsions rectangulaires délivrées par le détecteur de passages à zéro 2 n'est pas égale à T/2, la durée T3 des impulsions rectangulaires positives étant supérieure à T/2 et celle T4 des impulsions rectangulaires négatives étant inférieure à T/2. Par conséquent, en sortie de l'intégrateur 4 les rampes croissantes du signal triangulaire ont une durée T3 et les rampes décroissantes ont une durée T4, comme représenté figure 4. En désignant par a la pente dV/dt du signal triangulaire, pente déterminée par le rapport V/RiCi puisque les impulsions rectangulaires appliquées à l'intégrateur ont une amplitude V fixe, les amplitudes ΔV des rampes croissantes et décroissantes qui étaient respectivement égales à: a T/2 et −a T/2 avant décrochage deviennent:

ΔV1=a T3 pour les rampes croissantes, et
ΔV2=−a T4=−a(T−T3) pour les rampes décroissantes T étant la période du signal de sonnerie.
Il vient alors ΔV1+ΔV2=2 a T3−aT; en désignant par d le rapport cyclique T3/T, on a ΔV1+ΔV2=a T(2d−1)
Si l'on calcule le rapport

$$\frac{\Delta V1 + \Delta V2}{\Delta V}$$

on obtient pour celui-ci la valeur

$$\frac{\Delta V1 + \Delta V2}{\Delta V} = \frac{aT\ (2d-1)}{aT/2} = 2(2d-1) \qquad (8)$$

Ce rapport représente la quantité d'acroissement du signal triangulaire à chaque période.

Dans le cas le plus défavorable indiqué précédemment, d=52,5%, cet acroissement est de 2 (1,05−1)=0,1 soit 10% à chaque période.

On voit sur la partie droite de la figure 4 que les rampes croissantes atteignent la tension de saturation +Vsat de sorte que l'on observe un palier entre les rampes croissantes et les rampes décroissantes; on notera également que les rampes décroissantes n'atteignent plus la tension −Vsat; le signal triangulaire délivré par le circuit intégrateur 4 est appliqué à l'entrée positive du premier comparateur 6, et lorsque l'amplitude positive de ce signal triangulaire atteint la tension de référence positive +Vr, le premier comparateur délivre un signal de comparaison de valeur 1 sur l'entrée S de la bascule 8. La sortie Q de la bascule passe à 1 et l'on obtient un signal de détection D de boucle. Lorsque le signal triangulaire prend ensuite une valeur inférieure à la tension de référence positive +Vr, lors de la rampe décroissante suivante, le premier comparateur 6 délivre un signal de comparaison de valeur 0, mais ceci ne provoque pas de changement sur la sortie Q de la bascule 8. La bascule conserve donc l'état qu'elle prend lorsque le signal triangulaire a atteint la tension de référence positive +Vr; on peut dire que la bascule a mémorisé l'égalité du signal triangulaire avec la tension de référence positive +Vr, puisque la sortie Q ne peut changer d'état, lorsque l'entrée S est à l'état 0, que si l'état de son entrée R devient 1, c'est-à-dire si le signal Son prend la valeur 1, ce qui interviendra lorsqu'il n'y aura plus de signal de sonnerie sur la ligne.

Dans le dispositif de détection de boucle, le signal triangulaire, après décrochage, a une valeur positive croissante, mais cette valeur ne peut pas augmenter indéfiniment; elle est limitée par les performances de l'amplificateur 5. On a supposé, à la figure 4, que la limite était la tension de saturation $+Vsat \leqslant +V$, $+V$ étant une tension d'alimentation de l'amplificateur, de sorte que dès que la saturation est atteinte on observe un pallier entre les rampes croissantes et les rampes décroissantes du signal triangulaire. Pratiquement les tensions de saturation positive et négative $+Vsat$ et $-Vsat$, sont égales à $+V$ et $-V$ et les tensions de référence $+Vr$ et $-Vr$ seront égales à $+Vsat$ et $-Vsat$. On notera que le dispositif de détection de boucle fonctionne également avec des tensions de référence inférieures aux tensions de saturation de l'amplificateur; cependant il ne faut pas prendre des tensions de référence trop faibles car cela conduirait à une constante de temps RiCi trop grande. En effet les pentes croissantes et décroissantes ont pour valeur $+V/RiCi$, et $-V/RiCi$, $+V$ étant la tension positive d'alimentation du détecteur de passages à zéro, égale, pour des raisons de commodité, à celle alimentant l'amplificateur 5; les amplitudes des rampes croissantes et décroissantes avant décrochage sont donc

$$\frac{+V.T}{2RiCi}$$

et $-VT/2RiCi$, T étant la période du signal de sonnerie.

Il faut donc que les tensions de référence $+Vr$ et $-Vr$ soient supérieures à ces valeurs qui sont d'autant plus petites que la constante de temps RiCi est plus grande.

La détection de boucle en phase sonnerie a lieu lorsque le signal triangulaire a une valeur égale à la tension de référence positive $+Vsat$, au cours d'une rampe croissante. Il s'écoule donc un certain temps entre l'instant du décrochage et l'instant ou cette égalité à lieu. Généralement les normes de l'Administration des Postes imposent que la détection de boucle en phase sonnerie soit effectuée en un temps égal ou inférieur à trois périodes du signal de sonnerie. L'équation (8) donne l'acroissement du signal triangulaire à chaque période, et l'on a indiqué que cet acroissement était de 10%, dans le cas le plus défavorable pour la détection de boucle, qui correspond à un rapport cyclique de 52,5%. Pour effectuer la détection en trois périodes, dans le cas le plus défavorable, il faut que l'on ait:

$$\Delta V. \ (1+3/10)=+Vsat-(-Vsat)$$

soit $$\Delta V=\frac{+Vsat-(-Vsat)}{1+3/10}$$

On a indiqué que les rampes avaient une pente constante

$$a=\frac{|V|}{RiCi}$$

et que l'amplitude $\Delta V$ des rampes croissantes avant décrochage était

$$\Delta V=\frac{aT}{2}=\frac{V.T}{2.RiCi}$$

On a donc

$$\frac{V.T}{2.RiCi}=\frac{+Vsat-(-Vsat)}{1+3/10}$$

d'ou

$$RiCi=\frac{V.T. \ (1+3/10)}{2[+Vsat-(-Vsat)]}$$

RiCi étant la constante de temps d'intégration du circuit intégrateur 4.

En prenant +V=10 volts, −V=10 volts, et +Vsat=10 volts et −Vsat=10 volts, il vient RiCi=6,5 millisecondes soit par exemple Ri=1000 ohms et Ci=6,5 microfarads.

En reportant cette valeur de Ri dans l'équation (7) et pour V=+Vsat, on obtient: Rp=110.000 ohms.

Lorsque le rapport cyclique d du courant de ligne est supérieur à 52,5%, la tension de saturation +Vsat est atteinte plus rapidement, puisque la quantité d'acroissement donnée par l'équation (8) est fonction du rapport cyclique d; par conséquent la détection de boucle en phase sonnerie aura lieu en moins de trois périodes.

On va indiquer à présent le rôle du deuxième comparateur 7 de la figure 1. Si avant décrochage la ligne est soumise à une perturbation extérieure d'amplitude suffisante pour annuler momentanément le courant de ligne, cela va se traduire par un rapport cyclique différent de 50%, et dans certains cas limites on pourrait obtenir une rampe croissante atteignant la valeur de la tension de référence +Vr. Il en résulte que le premier comparateur 6 va délivrer momentanément un signal de comparaison de valeur 1 sur l'entrée S de la bascule 8 dont la sortie Q va prendre la valeur 1; la bascule ne changera pas d'état puisque son entrée R reçoit de la porte OU 9 un signal de valeur 0 à partir du signal Son. Comme la valeur +Vr a été atteinte avant décrochage, le deuxième comparateur 7 va délivrer à la porte OU 9 un signal de comparaison de valeur 1 dès que le signal triangulaire, figure 4, va prendre la valeur −Vsat, puisque −Vr⩾−Vsat; il en résulte que l'entrée R de la bascule prend la valeur 1, et que la sortie Q va prendre la valeur 0, puisque son entrée S reçoit alors un signal de valeur 0.

Le deuxième comparateur 7 délivre donc périodiquement un signal de valeur 1, puisque le signal triangulaire avant décrochage prend périodiquement la valeur −Vsat. De cette manière l'entrée R de la bascule reçoit périodiquement un signal de valeur 1, qui met sa sortie Q à la valeur 0 si elle est passée, avant décrochage, à la valeur 1, suite à une perturbation extérieure sur la ligne. Le deuxième comparateur 7 a donc un rôle de sécurité. Bien évidemment, et comme on peut le voir sur la figure 4, ce deuxième comparateur 7 ne délivre pas de signal de comparaison égal à 1 après décrochage puisque le signal triangulaire n'atteint plus la valeur de la tension de référence négative −Vr après une rampe décroissante; en effet l'amplitude ΔV2 d'une rampe décroissante est alors inférieure à l'amplitude ΔV1 d'une rampe croissante.

La figure 3 représente une variante du dispositif de détection de boucle de la figure 1. Les mêmes références que celles de la figure 1 désignent les mêmes organes.

Dans cette figure 3, le signal de tension U=KI est appliqué sur l'entrée négative du détecteur de passages à zéro 2. Il en résulte que le signal rectangulaire délivré par le détecteur est inversé par rapport au signal de tension; par conséquent l'inverseur analogique 3 de la figure 1 a été supprimé. Cette variante de réalisation peut bien évidemment être introduite dans la figure 1, sans que cela change quoi que ce soit au fonctionnement indiqué, et pratiquement un dispositif de détection de boucle sera conforme à cette variante.

Dans la figure 3 une première résistance d'hystérésis R1H est connectée entre l'entrée positive et la sortie du détecteur de passages à zéro, et une deuxième résistance d'hystérésis R2H est connectée entre la masse et l'entrée positive du détecteur de passages à zéro. La figure 3 ne comporte pas d'autre modification par rapport à la figure 1. Bien évidemment les résistances d'hystérésis pourraient être introduites dans la figure 1 sans que cette figure 1 soit autrement modifiée.

On va donner ci-après le fonctionnement du dispositif de la figure 3.

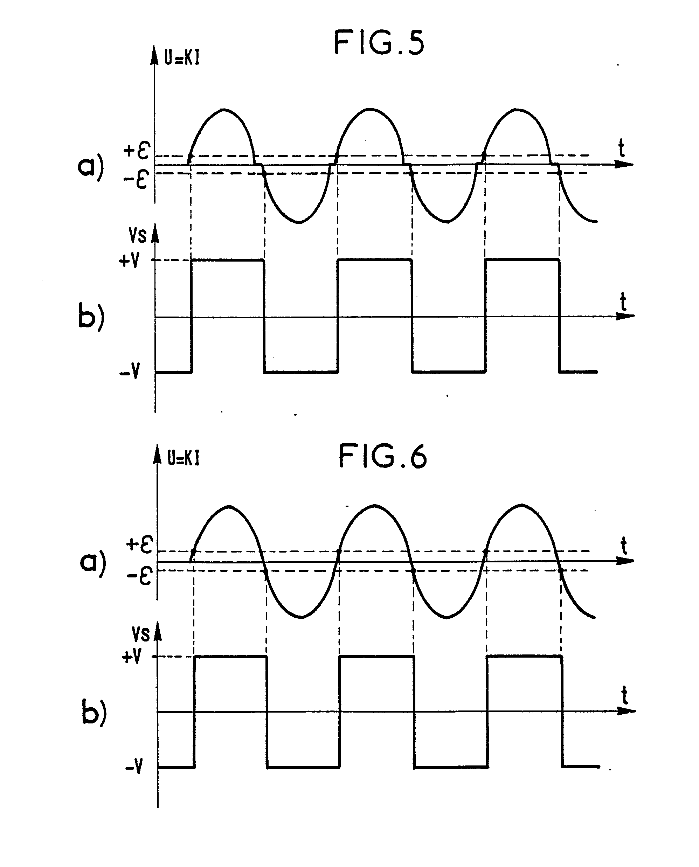

L'onde de sonnerie délivrée par un générateur est une onde de tension sinusoïdale, mais le courant de ligne résultant de l'application de cette tension sur un poste électronique n'est pas rigoureusement sinsoïdal, mais présente des palliers non négligeables de courant de valeur nulle entre deux alternances positives et négatives. La figure 5a, courbe U=KI, représente le signal de tension à l'entrée du détecteur de passages à zéro, et la figure 5b représente le signal rectangulaire délivré par le détecteur de passages à zéro, dans le cas du signal de tension représenté figure 5a, c'est-à-dire dans le cas d'un courant de ligne non rigoureusement sinusoïdal.

Si l'on appliquait le signal de tension U=KI de la figure 5a au détecteur de passages à zéro de la figure 1, celui ci ne fonctionnerait pas de façon satisfaisante par suite de la présence des palliers de courant nul. On a donc introduit, comme indiqué figure 3, un phénomène d'hystérésis, grâce aux première et deuxième résistances d'hystérésis R1H et RH2. De cette manière le détecteur de passages à zéro fonctionne comme un comparateur à deux seuils de tension +ε pour les alternances positives du courant et −ε pour les alternances négatives, l'entrée positive du détecteur étant alternativement portée à une tension de seuil positive +ε et à une tension de seuil négative −ε. Avant décrochage les impulsions rectangulaires positives et négatives délivrées par le détecteur de passage à zéro ont même durée puisque pour une alternance positive le détecteur fonctionnera à partir du seuil +ε jusqu'au seuil −ε, et que pour une alternance négative il fonctionnera à partir du seuil −ε jusqu'au seuil +ε. On obtient donc un rapport cyclique de 50%.

Au décrochage le signal de tension U=KI appliquée à l'entrée du détecteur de passages à zéro est de la forme U=A+B sin wt

D-après l'équation (2) donnant le courant on en déduit

# 0 100 514

$$A = \frac{KVc}{Zc} \text{ et } B = \frac{KVa}{|Za|}$$

Ce signal franchit les seuils $+\varepsilon$ et $-\varepsilon$ du détecteur de passages à zéro aux temps:

$$t5 = \frac{1}{w}.\text{Arc sin } (A-\varepsilon)/B$$

et

$$t6 = \frac{\pi}{2} - \frac{1}{w}.\text{ Arc sin } (A+\varepsilon)/B$$

$$\Delta t = t6 - t5$$

$$\Delta t = \frac{\pi}{w} + \frac{1}{w}.\text{ Arc sin } \left[ \frac{A+B}{\varepsilon} \sqrt{1 - \frac{(A-\varepsilon)^2}{B^2}} + \frac{A-\varepsilon}{B} \sqrt{1 - \frac{(A+\varepsilon)^2}{B^2}} \right]$$

soit

$$\Delta t = \frac{\pi}{w} + \frac{1}{w}.\text{ Arc sin } M,$$

en désignant par M l'expression entre crochets.
Le rapport cyclique a pour valeur:

$$dH = \frac{1}{2} + \frac{1}{2\pi}.\text{ Arc sin } M.$$

Pratiquement on adoptera pour les seuils une valeur $|\varepsilon|$ égale à 50% de la tension que donne la composante continue du courant déterminée pour la ligne la plus longue. Pour une résistance de ligne RI=2000 ohms et une tension continue de 12 volts pour l'alimentation de la ligne, le courant de ligne est de 6 mA, ce qui donne $A=K.6.10^{-3}$, d'où $|\varepsilon|=K.3.10^{-3}$. Avec K=100 ohms, on a $|\varepsilon|=0,3$ volt. Les seuils sont donc $+\varepsilon=+0,3$ volt et $-\varepsilon=-0,3$ volt. Le détecteur de passages à zéro étant alimenté par les tensions $+V=10$ volts et $-V=-10$ volts, il délivre des impulsions rectangulaires d'amplitude +10 et −10 volts. Les seuils étant de +0,3 et −0,3 volts on a:

$$R1H+R2H=10000 \text{ ohms avec } R1H: 9700 \text{ ohms}$$

et

$$R2H=300 \text{ ohms.}$$

Ces valeurs améliorent le rapport cyclique aussi bien dans le cas le plus défavorable que dans le meilleur cas. Le dispositif de détection de boucle en phase sonnerie de la figure 3 peut bien entendu être utilisé avec un courant sinusoïdal, les figures 6a et 6b représentant respectivement le signal de tension et les impulsions rectangulaires à l'entrée et à la sortie du détecteur de passages à zéro de la figure 3, dans le cas d'un courant de ligne sinusoïdal. Comme précédemment le détecteur de passages à zéro fonctionne comme un comparateur à deux seuils $+\varepsilon$ et $-\varepsilon$.

Le dispositif de détection de boucle en phase sonnerie de la figure 3 procure une meilleure détection dans tous les cas, notamment lorsque le courant de ligne n'est pas sinusoïdal mais présente des alternances positives et négatives séparées par un pallier de courant nul.

Le dispositif de détection de boucle de l'invention permet également la détection de boucle en présence de bruit sur la ligne, le rapport cyclique correspondant à une ligne de caractéristiques données n'étant pratiquement pas changé par le bruit tant que l'amplitude de celui-ci est inférieure à l'amplitude du courant de ligne. On a indiqué d'autre part que le dispositif présentait également une très bonne immunité aux perturbations extérieures de grande amplitude mais de durée brève.

Le dispositif de détection de boucle en phase sonnerie de la figure 3 est celui qui est le plus simple, puisqu'il ne comporte pas d'inverseur analogique (3). C'est donc ce dispositif que l'on utilisera de préférence à celui de la figure 1. Comme indiqué les résistances d'hystérésis R1H et R2H ne sont nécessaires que lorsque le courant de sonnerie présente des paliers de durée non négligeable entre les alternances positives de négatives, ces paliers de courant nul constituant des zones d'incertitudes pour les passages à zéro du courant, d'où risques de mauvais fonctionnement du détecteur de passages à zéro, et finalement du dispositif de détection de boucle.

10

**0 100 514**

Le dispositif de détection de boucle en phase sonnerie de l'invention, représenté figure 1 et 3, utilise des dispositifs électroniques classiques: détecteur de passages à zéro, circuit intégrateur, comparateurs, bascule de type RS. Tous ces dispositifs peuvent être réalisés sous forme de circuit intégré, de sorte que le dispositif de détection de boucle peut être inclus aisément dans un joncteur électronique.

## Revendications

1. Dispositif de détection de boucle en phase sonnerie comportant des moyens de détection des passages à zéro (2) d'un signal de tension proportionnel au courant de ligne pour élaborer un signal impulsionnel constitué par des impulsions rectangulaires positives et négatives de même amplitude et dont la largeur dépend du rapport cyclique du signal de ligne, des moyens de traitement (4, 6) du signal impulsionnel et des moyens de mémorisation (8) pour mémoriser un signal délivré par les moyens de traitement, caractérisé par le fait que les moyens de traitement sont constitués par un circuit intégrateur saturable (4) délivrant un signal triangulaire ayant une valeur crête positive croissante après décrochage, et par un comparateur (6) pour comparer le signal triangulaire avec une tension de référence (+Vr) et délivrer un signal aux moyens de mémorisation lorsqu'un abonné appelé a décroché.

2. Dispositif de détection de boucle en phase sonnerie selon la revendication 1, caractérisé par le fait que les moyens de détection des passages à zéro (2), sont constitués par une bascule de SCHMITT ayant une entrée positive reliée à la masse, une entrée négative recevant un signal de tension (U=KI) proportionnel au courant de ligne, et une sortie reliée au circuit intégrateur, que le circuit intégrateur saturable comporte une résistance (Ri), une résistance de polarisation (Rp), un condensateur (Ci) et un amplificateur (5), l'amplificateur ayant une entrée positive reliée à la masse, une entrée négative reliée d'une part à la sortie du détecteur (2) par la résistance (Ri) et d'autre part à une tension positive (+V) par la résistance de polarisation (Rp) et une sortie reliée d'une part à l'entrée négative par le condensateur (Ci) et d'autre part à une entrée positive du comparateur (6), que les moyens de mémorisation sont constitués par une bascule, que le comparateur (6) a une entrée négative reliée à une tension de référence positive (+Vr) et une sortie reliée à une entrée signal (S) de la bascule (8), qu'une entrée remise à zéro (R) de la bascule reçoit un signal de valeur 0 lorsqu'un signal de sonnerie est présent sur la ligne, et qu'une sortie (Q) de la bascule délivre un signal de détection de boucle (D).

3. Dispositif de détection de boucle en phase sonnerie selon la revendication 2, caractérisé par le fait que le détecteur de passages à zéro (2) a son entrée positive reliée d'une part à sa sortie par une première résistance d'hystérésis (R1H) et d'autre part à la masse par une deuxième résistance d'hystérésis (R2H) de manière à créer alternativement un seuil positif (+ε) et un seuil négatif (−ε) sur ladite entrée positive.

4. Dispositif de détection de boucle en phase sonnerie selon l'une des revendications 2 et 3, caractérisé par le fait que les moyens de traitement comportent un deuxième comparateur (7) ayant une entrée négative reliée à la sortie de l'amplificateur (5) du circuit intégrateur (4), une entrée positive reliée à une tension de référence négative (−Vr), et une sortie reliée par une porte OU (9) à l'entrée remise à zéro (R) de la bascule, et que la porte OU reçoit sur une entrée un signal de valeur zéro lorsqu'un signal de sonnerie est présent sur la ligne.

## Patentansprüche

1. Vorrichtung zur Erfassung des Schleifenschlusses in der Rufphase, mit Mitteln (2) zur Erfassung der Nulldurchgänge eines zum Schleifenstrom proportionalen Spannungssignals, das von positiven und negativen Rechteckimpulsen gleicher Amplitude gebildet wird und eine Impulsbreite besitzt, die vom zyklischen Verhältnis des Leitungssignals abhängt, mit Mitteln (4, 6) zur Bearbeitung des Impulssignals und mit Mitteln (8) zur Speicherung eines von den Bearbeitungsmitteln gelieferten Signals, dadurch gekennzeichnet, daß die Bearbeitungsmittel von einem sättigungsfähigen Integrierkreis (4), der ein Dreiecksignal mit einem nach dem Abheben des Hörers ansteigenden positiven Spitzenwert liefert, und von einem Komparator (6) gebildet sind, um das Dreiecksignal mit einer Bezugsspannung (+Vr) zu vergleichen und ein Signal an die Speichermittel zu liefern, wenn ein gerufener Teilnehmer den Hörer abgehoben hat.

2. Vorrichtung zur Erfassung des Schleifenschlusses in der Rufphase nach Anspruch 1, dadurch gekennzeichnet, daß die Mittel zur Erfassung der Nulldurchgänge (2) von einer Schmitt-Kippstufe mit einem positiven Eingang, der an Masse liegt, einem negativen Eingang, der ein Spannungssignal (U=KI) proportional zum Schleifenstrom empfängt, und mit einem an den Integrierkreis angeschlossenen Ausgang gebildet, werden daß der sättigungsfähige Integrierkreis einen Widerstand (Ri), einen Vorspannungswiderstand (Rp), einen Kondensator (Ci) und einen Verstärker (5) aufweist, wobei der Verstärker mit einem positiven Eingang an Masse, einem negativen Eingang einerseits über den Widerstand (Ri) an den Ausgang des Detektors (2) und andererseits über den Vorspannungswiderstand (Rp) an eine positive Spannung (+V) und mit einem Ausgang einerseits an den negativen Eingang über den Kondensator (Ci) und andererseits an einen positiven Eingang des Komparators (6) angeschlossen ist, daß die Speichermittel von einer Kippstufe gebildet werden, daß der Komparator (6) mit einem negativen Eingang an eine positive Bezugsspannung (+Vr) und mit einem Ausgang an einen Signaleingang (S) der Kippstufe (8) angeschlossen ist, daß ein Nullsetzungseingang (R) der Kippstufe ein Signal des Werts 0

11

empfängt, wenn ein Rufsignal auf der Leitung vorliegt, und daß ein Ausgang (Q) der Kippstufe ein den Schleifenschluß (D) anzeigendes Signal liefert.

3. Vorrichtung zur Erfassung des Schleifenschlusses in der Rufphase nach Anspruch 2, dadurch gekennzeichnet, daß der Nulldurchgangsdetektor (2) mit seinem positiven Eingang einerseits über einen ersten Hysteresiswiderstand (R1H) an seinen eigenen Ausgang und andererseits über einen zweiten Hysteresiswiderstand (R2H) an Masse angeschlossen ist, so daß abwechselnd eine positive (+ε) und eine negative Schwelle (−ε) an dem positiven Eingang erzeugt wird.

4. Vorrichtung zur Erfassung des Schleifenschlusses in der Rufphase nach einem der Ansprüche 2 und 3, dadurch gekennzeichnet, daß die Bearbeitungsmittel einen zweiten Komparator (7) aufweisen, der mit einem negativen Eingang an den Ausgang des Verstärkers (5) des Integrierkreises (4), mit einem positiven Eingang an eine negative Bezugsspannung (−Vr) und mit einem Ausgang über ein ODER-Toer (9) an den Nullsetzungseingang (R) der Kippstufe angeschlossen ist, und daß das ODER-Tor über einen Eingang ein Signal des Werts 0 empfängt, wenn ein Rufsignal auf der Leitung vorliegt.

**Claims**

1. A device for detecting the loop during the ringing phase, including zero pass detector means (2) for detecting zero passes in a voltage signal proportional to the line current in order to generate a pulse signal constituted by rectangular positive and negative pulses of even amplitude, the width of which depends on the cyclic ratio of the line signal, further including pulse signal processing means (4, 6) and memory means (8) for storing a signal supplied by the processing means, characterized in that the processing means are constituted by a saturable integrator circuit (4) supplying a triangular signal having a positive peak value which increases after ringing has been answered, and by a comparator (6) for comparing the triangular signal with a reference voltage (+Vr) and for supplying a signal to the memory means when a called subscriber has lifted his handset.

2. A device for detecting the loop during the ringing phase according to claim 1, characterized in that the zero pass detection means (2) are constituted by a Schmitt flip-flop, a positive input of which is connected to earth, a negative input of which receives a voltage signal (U=Kl) proportional to the line current and an output of which is connected to the integrator circuit, that the saturable integrator circuit comprises a resistor (Ri), a bias resistor (Rp), a capacitor (Ci) and an amplifier (5), a positive input of the amplifier being connected to earth, a negative input being connected on the one hand to the output of the detector (2) via the resistor (Ri) and on the other hand to a positive voltage (+V) via the bias resistor (Rp), and an output being connected on the one hand to the negative input via the capacitor (Ci) and on the other hand to a positive input of the comparator (6), that the memory means are constituted by a bistable, that the comparator (6) has a negative input which is connected to a positive reference voltage (+Vr), and an output which is connected to a signal input (S) of the bistable (8), that a zero setting input (R) of the bistable receives a signal of zero value when a ringing signal is present on the line, and that an output (Q) of the bistable supplies a loop detection signal (D).

3. A device for detecting a loop during the ringing phase according to claim 2, characterized in that the positive input of the zero pass detector (2) is connected on the one hand to its output via a first hysteresis resistor (R1H) and on the other hand to earth via a second hysteresis resistor (R2H) such that alternating positive and negative thresholds (+ε, −ε) are created at said positive input.

4. A device for detecting a loop during the ringing phase according to claims 2 and 3, characterized in that the processing means include a second comparator (7), a negative input of which is connected to the output of the amplifier (5) of the integrator circuit (4), a positive input of which is connected to a negative reference voltage (−Vr) and an output of which is connected via an OR gate (9) to the zero setting input (R) of the bistable, and that the OR gate receives via an input a zero value signal when a ringing signal is present on the line.

# FIG. 1

$U = KI$

# FIG. 2

$U = KI = R1 \cdot I$

# FIG. 3

# FIG. 4

# FIG.5

a)

b)

# FIG.6

a)

b)